(19) Europäisches Patentamt
European Patent Office
Office européen des brevets

(11) **EP 3 327 745 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(51) Int Cl.:
*H01H 39/00* *(2006.01)*      *B60L 3/04* *(2006.01)*
*B60R 21/017* *(2006.01)*

(21) Anmeldenummer: **17175625.7**

(22) Anmeldetag: **13.06.2017**

(54) **ELEKTRISCHE SICHERUNG, VERFAHREN ZUM BETREIBEN EINER ELEKTRISCHEN SICHERUNG UND ELEKTRISCHES TRAKTIONSNETZ**

ELECTRIC FUSE, METHOD FOR OPERATING AN ELECTRIC FUSE AND ELECTRICAL TRACTION NETWORK

FUSIBLE ÉLECTRIQUE, PROCÉDÉ DE FONCTIONNEMENT D'UN FUSIBLE ÉLECTRIQUE ET RÉSEAU DE TRACTION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2016 DE 102016223565**
**08.03.2017 DE 102017203851**

(43) Veröffentlichungstag der Anmeldung:
**30.05.2018 Patentblatt 2018/22**

(73) Patentinhaber: **VOLKSWAGEN AKTIENGESELLSCHAFT**
**38440 Wolfsburg (DE)**

(72) Erfinder: **Kube, Roland**
**38179 Schwülper (DE)**

(56) Entgegenhaltungen:
**EP-A1- 0 563 947     EP-A1- 3 054 577**
**EP-A2- 0 725 412     DE-U1-202015 106 793**

EP 3 327 745 B1

**Beschreibung**

Die Erfindung betrifft eine elektrische Sicherung, ein Verfahren zum Betreiben einer elektrischen Sicherung sowie elektrisches Traktionsnetz.

Hochvoltbatterien für Kraftfahrzeuge enthalten neben Batteriezellen eine Anschlusseinheit (engl. "Battery Junction Box"), die es ermöglicht, eine batterie-interne Hochspannung aktiv auf das Fahrzeug-Traktionsnetz zu schalten oder von diesem zu trennen. Hierdurch kann erreicht werden, dass auf dem Fahrzeug-Traktionsnetz nur während der Fahrt Hochspannung liegt, bei abgestelltem Kraftfahrzeug hingegen Spannungsfreiheit herrscht. Üblicherweise weist die Anschlusseinheit zwei elektromechanische Schütze auf, über die ein Pluspfad und ein Minuspfad zu- bzw. weggeschaltet werden können.

Während des Batteriebetriebs (z.B. bei der Fahrt oder beim Laden der Batterien) wird eine Überlastung der Batteriezellen und der elektromechanischen Schütze verhindert, indem ein maximal zulässiger Strom begrenzt wird, wobei aktuelle Randbedingungen berücksichtigt werden, wie beispielsweise eine Temperatur der Batteriezellen. Wird der maximale Strom überschritten, so erfolgt nach einer vordefinierten Plausibilisierungszeit ein Öffnen der Schütze. Hierdurch wird eine Beschädigung der Batteriezellen verhindert.

Ferner ist grundsätzlich zu beachten, dass eine Stromtragfähigkeit der Schütze nicht überschritten wird. Oberhalb der Stromtragfähigkeit bewirkt ein durch den Stromfluss verursachter Wärmeeintrag ein Verschweißen von Schützkontakten der Schütze. Um dies zu vermeiden, müssen die Schütze vor Erreichen der Stromtragfähigkeit geöffnet werden.

Im Fall eines Kurzschlusses überschreitet der Strom jedoch so schnell die Stromtragfähigkeit der Schütze, dass mit einem Verschweißen der Schützkontakte gerechnet werden muss. Daher wird üblicherweise eine zusätzliche Schmelzsicherung vorgesehen, die in diesem Fall die Trennung den Stromkreises übernimmt und damit sowohl die Batteriezellen als auch das Hochvoltbordnetz vor einer Überlastung schützt.

Bei der Sicherungsauslegung muss die Alterung der Sicherungen durch die während des Fahrzeugbetriebs auftretenden, ausgeprägten Strom-Peaks berücksichtigt werden. Da die Auslöseschwelle der Sicherungen mit zunehmender Alterung abnimmt, ist es erforderlich, Sicherungen einzusetzen, die genügend groß sind, um auch in gealtertem Zustand bei Strom-Peaks innerhalb des normalen Betriebsstrom-Bereichs nicht auszulösen. Im Neuzustand hingegen haben diese großen Sicherungen jedoch eine höhere Auslöseschwelle, so dass die Kabelquerschnitte des angeschlossenen Hochvoltbordnetzes entsprechend groß gewählt werden müssen.

In einem Traktionsnetz eines Fahrzeugs wird nicht nur der Elektromotor durch die Hochvoltbatterie versorgt, sondern gegebenenfalls auch weitere Komponenten wie beispielsweise Klimakompressoren, Zuheizer, Ladegeräte und/oder DC/DC-Wandler. Da deren Leistungsaufnahme erheblich geringer ist als die des Elektromotors, ist bekannt, den Elektromotor durch Hauptleitungen mit der Hochvoltbatterie zu verbinden und die weiteren Komponenten über Nebenleitungen mit der Hochvoltbatterie zu verbinden, wobei diese durch eine jeweils auf die fließenden Ströme angepasste Schmelzsicherung abgesichert werden.

Zum Schutz von 12-V-Bordnetzbatterien in Kraftfahrzeugen ist ferner ein Pyroelement (sogenannte "Pyro-Fuse") bekannt. Ein solches Pyroelement wird beispielsweise von der Firma Autoliv als "Pyro Safety Switch (PSS)" vertrieben. Der "Pyro Safety Switch" befindet sich in direkter Nähe zu der 12-V-Bordnetzbatterie und trennt im Falle eines Unfalls die Verbindungsleitung zwischen der 12-V-Bordnetzbatterie und einem 12-V-Generator und/oder einem 12-V-Bordnetz. Als Signal zum Auslösen dieser Trennung wird beispielsweise ein Signal eines Airbag-Steuergeräts (engl. Airbag Control Unit - ACU) benutzt. Sobald dieses Signal den Zustand "aktiv" einnimmt, erzeugt die ACU an einem Steuereingang des "Pyro Safety Switches" eine Spannung von >10 V. Entsprechend dem Innenwiderstand des "Pyro Safety Switches" resultiert hieraus ein Strom von >1,75 A, wodurch spätestens nach 0,5 ms eine Sprengladung in einem Zünder des "Pyro Safety Switches" explodiert und ein kolbenförmiges Trennelement in Bewegung setzt. Spätestens nach weiteren 0,1 ms berührt das kolbenförmige Trennelement mit einer speziell hierfür ausgebildeten Nase einen Trennabschnitt einer Stromschiene und durchtrennt diese. Die Stromschiene ist anschließend durchtrennt und ein Strom kann nicht mehr über diese fließen.

Aus der DE 10 2010 002 102 A1 ist ferner eine Wechselrichtervorrichtung für Elektrofahrzeuge bekannt. Hierbei erfasst eine Steuereinheit einer Fahrzeugsteuerung ein Schalter-Öffnen-Signal, das von einem Kollisionsdetektor ausgegeben wird, wenn durch eine Kollision zwischen Elektrofahrzeugen ein Betrieb des Kollisionsdetektors veranlasst wird. Anschließend wird der Wechselrichter-Hauptstromkreis-Anschlussschalter einer Hochspannungs-Batterieeinheit in einen geöffneten Zustand versetzt. Auf diese Weise wird die Gleichstromversorgung eines DC-Busabschnitts aus einer Hochspannungsbatterie unterbrochen. Darüber hinaus werden in einen Hauptstromkreis-Kondensator geladene elektrische Ladungen durch einen Zwangsentladeschaltungs-Abschnitt entladen.

Aus der DE 10 2012 214 835 A1 ist ein pyrotechnischer Schalter für ein Kraftfahrzeug-Batteriesystem und eine Batterie bekannt, wobei der Schalter einen Shunt, welcher seriell in einen Schaltstrompfad eingebunden ist, ein Schaltelement, welches seriell in den Schaltstrompfad eingebunden ist, und einen elektrisch aktivierbaren pyrotechnischen Zünder umfasst, wobei ein Steuerausgang einer elektronischen Schaltung mit dem Zünder und ein Steuereingang der Schaltung mit dem Shunt verbunden ist. Ferner ist ein Verfahren zur Ansteuerung eines pyrotechnischen Schalters beschrieben, mit den Schritten: Ansteuern mindestens eines Steuereingangs der elektronischen Schaltung mit einer elektrischen Ist-Größe, Vergleichen der Ist-Größe mit einem vorgebbaren Grenzwert, Aktivieren des Zünders, sofern die Ist-Größe den Grenzwert überschreitet, und Aktivieren des Schaltelements durch den aktivierten Zünder, so dass der Versorgungsstrom getrennt wird, wobei die elektronische Schaltung mit einem Ladungsspeicher gepuffert wird.

Aus der EP 3 054 577 A1 ist eine elektrische Sicherung bekannt, umfassend einen elektro-pyrotechnischen Zünder, ein mittels des elektro-pyrotechnischen Zünders bewegbares Trennelement und eine Stromschiene mit einem Trennabschnitt, wobei das bewegliche Trennelement in Bezug auf den elektro-pyrotechnischen Zünder und den Trennabschnitt der Stromschiene derart angeordnet ist, dass das bewegbare Trennelement sich nach einem Auslösen des elektro-pyrotechnischen Zünders in Bewegung setzen und hierdurch die Stromschiene im Trennabschnitt durchtrennen kann. Dabei weist die Sicherung einen Stromsensor in Form eines Shunts oder magnetischen Sensors, beispielsweise eines Hallsensors, auf, um den Strom auf der Stromschiene zu erfassen. Der Stromsensor liefert seine Daten an eine Steuereinheit, die dann nach Auswertung der Daten einen Auslöseimpuls für den elektro-pyrotechnischen Zünder erzeugt.

Ähnliche elektrische Sicherungen sind aus der EP 0 725 412 A2 und der EP 0 563 947 A1 bekannt.

Aus der DE 20 2015 106 793 U1 ist eine Schutzvorrichtung bekannt, vorzugsweise zum sicheren Trennen einer elektrischen Verbindungsanordnung in einer Hochstrom- und/oder Hochspannungsanwendung, umfassend eine Schmelzsicherung mit einem Schmelzleiter zwischen einem ersten Anschluss und einem zweiten Anschluss und ein auslösbares mechanisches Trennelement. Das Trennelement ist angeordnet und ausgebildet, um auf ein Auslösesignal der Schmelzsicherung hin die elektrische Verbindungsanordnung über das Trennelement zwischen den Anschlüssen zu trennen. Vorzugsweise ist das Trennelement mittels einer aktivierbaren pyrotechnischen Zündeinheit aktivierbar. Dabei verfügt die pyrotechnische Zündeinheit über Zünderanschlüsse, welche jeweils mit einem der Anschlüsse elektrisch verbunden sind, um ein Zündsignal von der Schmelzsicherung zu detektieren. Das Zündsignal ist dabei vorzugsweise ein Spannungsabfall über der Schmelzsicherung beim Aufschmelzen.

Der Erfindung liegt das technische Problem zu Grunde, eine elektrische Sicherung und ein Verfahren zum Betreiben einer elektrischen Sicherung zu schaffen, bei denen ein Aufbau der elektrischen Sicherung vereinfacht ist. Ein weiteres technisches Problem ist die Schaffung eines verbesserten elektrischen Traktionsnetzes.

Die technische Aufgabe wird erfindungsgemäß durch eine elektrische Sicherung mit den Merkmalen des Patentanspruchs 1, ein Verfahren mit den Merkmalen des Patentanspruchs 4 sowie ein elektrisches Traktionsnetz mit den Merkmales des Anspruchs 5 gelöst. Vorteilhafte Ausgestaltungen der Erfindung ergeben sich aus den Unteransprüchen.

Insbesondere wird eine elektrische Sicherung geschaffen, umfassend einen elektro-pyrotechnischen Zünder, ein mittels des elektro-pyrotechnischen Zünders bewegbares Trennelement, und eine Stromschiene mit einem Trennabschnitt, wobei das bewegbare Trennelement in Bezug auf den elektro-pyrotechnischen Zünder und den Trennabschnitt der Stromschiene derart angeordnet ist, dass das bewegbare Trennelement sich nach einem Auslösen des elektro-pyrotechnischen Zünders in Bewegung setzen und hierdurch die Stromschiene im Trennabschnitt durchtrennen kann, wobei die elektrische Sicherung mindestens ein Auslösemittel aufweist, welches derart ausgebildet ist, einen zum Auslösen des elektro-pyrotechnischen Zünders notwendigen Zündstrom auf Grundlage eines über mindestens einen Abschnitt der Stromschiene geführten Stroms oder dessen zeitlicher Änderung bereitzustellen, wenn der auf dem mindestens einen Abschnitt der Stromschiene geführte Strom oder dessen zeitliche Änderung einen Grenzwert überschreitet.

Dabei ist vorgesehen, dass das mindestens eine Auslösemittel eine Induktionsschleife umfasst, wobei die Induktivität der Induktionsschleife derart festgelegt ist, dass die Induktionsschleife den notwendigen Zündstrom über induktive Kopplung mit zumindest einem Abschnitt der Stromschiene bereitstellen kann. Der Vorteil ist, dass die Induktionsschleife den Zündstrom direkt bereitstellt, wenn der über die Stromschiene fließende Strom bzw. deren zeitliche Änderung den Grenzwert überschreitet. Die Induktivität der Induktionsschleife wird dann entsprechend des vorgegebenen Grenzwertes ausgelegt. Liegt die zeitliche Änderung des Stromes auf dem Abschnitt der Stromschiene unterhalb des Grenzwertes, so liegt auch der mittels der Induktionsschleife induzierte Strom unterhalb des notwendigen Zündstroms. Um dies auch bei den Nenn- bzw. Betriebsströmen überlagerten Störungen, beispielsweise hervorgerufen durch die hochfrequenten Schaltvorgänge im Pulswechselrichter des Elektroantriebs oder des Klimakompressors sicherzustellen, sind ggfs. den Induktivitäten nachgeschaltete Filter erforderlich, die Fehlauslösungen vermeiden.

Wenn der Grenzwert überschritten wird, erreicht der induzierte Strom den notwendigen Zündstrom und der Zünder löst aus. Ein weiterer Vorteil ist, dass in dieser Ausführungsform bereits ohne zusätzlichen Aufwand eine galvanische Trennung vorhanden ist.

Weiter ist ferner vorgesehen, dass das mindestens eine Auslösemittel ferner einen in die Induktionsschleife hinein bewegbaren Eisenkern aufweist, über den die Induktivität verändert werden kann. Dies ermöglicht ein Einstellen der Induktivität und hierüber auch ein gezieltes Einstellen des Grenzwertes für die zeitliche Änderung des Stromes über den Abschnitt auf der Stromschiene, bei dem der notwendige Zündstrom für den Zünder bereitgestellt werden soll. Es besteht somit die Möglichkeit, die elektrische Sicherung in Bezug auf den Grenzwert variabel herzustellen und den konkreten Grenzwert dann erst vor, bei oder nach einem Einbau, beispielsweise in ein Kraftfahrzeug, festzulegen. Ferner kann der Grenzwert auch im Nachhinein verändert werden, beispielsweise um auf Veränderungen am Kraftfahrzeug, beispielsweise einem Einbau einer anderen Batterie etc., reagieren zu können. Der Grenzwert kann dann auf einfache Weise angepasst werden.

In einer Ausführungsform wird der Eisenkern beispielsweise mit Hilfe eines Bimetalls automatisch in Abhängigkeit einer Temperatur, z.B. der Temperatur innerhalb des Batteriegehäuses, verschoben, so dass eine Selbstanpassung der Auslöseschwelle der elektrischen Sicherung an veränderte Umgebungsbedingungen erfolgt. Dies ist z. B. im Kurzschlussfall nach einem Rückgang der Batterietemperatur auf einen sehr niedrigen Wert, etwa während einer Parkphase des Fahrzeugs im Winter nach einer Betriebsphase des Fahrzeugs, vorteilhaft. Auf Grund der bei niedriger Temperatur stark eingeschränkten Batterie-Entladeleistung resultiert auch im Kurzschluss-Fall unter diesen Bedingungen nur ein Batteriestrom innerhalb des normalen Betriebsstrombereichs bei Normaltemperatur und damit weit unterhalb einer mit der Temperatur nicht nachgeführten Auslöseschwelle. Dieser zwar vergleichsweise niedrige Strom würde ohne Auslösung der Sicherung bis zur Tiefentladung der Batterie anstehen. Durch Nachführung der Sicherungs-Auslöseschwelle mit der Temperatur kann diese Situation und die daraus resultierende irreversible Schädigung der Batterie vermieden werden.

Ferner wird ein Verfahren zum Betreiben einer elektrischen Sicherung zur Verfügung gestellt, umfassend die folgenden Schritte: Bereitstellen eines Zündstroms für einen elektro-pyrotechnischen Zünder, Auslösen des elektro-pyrotechnischen Zünders, Bewegen eines bewegbaren Trennelements mittels des ausgelösten elektro-pyrotechnischen Zünders, Durchtrennen eines Trennabschnitts einer Stromschiene mittels des bewegbaren Trennelements, wobei der zum Auslösen des elektro-pyrotechnischen Zünders notwendige Zündstrom mittels mindestens eines Auslösemittels auf Grundlage eines über mindestens einen Abschnitt der Stromschiene geführten Stromes oder dessen zeitlicher Änderung bereitgestellt wird, wenn der auf dem mindestens einen Abschnitt der Stromschiene geführte Strom oder dessen zeitliche Änderung einen Grenzwert überschreitet. Dabei wird der Zündstrom durch eine Induktionsschleife geliefert, die mit einem Abschnitt der Stromschiene induktiv gekoppelt ist, wobei die Induktivität der Induktionsschleife durch einen bewegbaren Eisenkern eingestellt werden kann.

Ferner wird ein elektrisches Traktionsnetz in einem Kraftfahrzeug zur Verfügung gestellt, umfassend eine Hochvoltspannungsquelle, vorzugsweise eine Hochvoltbatterie, einen Elektromotor und weitere Hochvoltkomponenten, wobei der Elektromotor über Hauptleitungen mit der Hochvoltspannungsquelle und die weiteren Hochvoltkomponenten über Nebenleitungen mit der Hochvoltspannungsquelle verbunden sind. Dabei ist in den Hauptleitungen und/oder den Nebenleitungen jeweils eine zuvor beschriebene elektrische Sicherung angeordnet, d. h. die Absicherung der Haupt- und/oder Nebenleitungen erfolgt voneinander unabhängig. Dabei kann auch vorgesehen sein, dass beispielsweise nur die Hauptleitungen mittels einer elektrischen Sicherung abgesichert sind, die Nebenleitungen aber weiterhin eine Schmelzsicherung aufweisen und umgekehrt. Vorzugsweise weisen aber sowohl die Haupt- als auch die Nebenleitungen eine elektrische Sicherung auf. Der Vorteil ist, dass dann Hauptleitungen und Nebenleitungen voneinander unabhängig getrennt werden können, sodass beispielsweise beim Auftrennen der Nebenleitungen der Elektromotor weiter betrieben werden kann. Dabei kann weiter vorgesehen sein, dass den mehreren weiteren Komponenten jeweils eigene Nebenleitungen zugeordnet sind, sodass gezielt jeweils nur die Nebenleitungen der Komponenten durchtrennt werden müssen, wo ein Fehler detektiert wird.

In einer alternativen Ausführungsform werden die Haupt- und Nebenleitungen durch eine gemeinsame elektrische Sicherung abgesichert, wobei die elektrische Sicherung zwei Auslösemittel aufweist, wobei dem ersten Auslösemittel ein erster Abschnitt der Stromschiene und dem weiteren Auslösemittel ein zweiter Abschnitt der Stromschiene zugeordnet ist, wobei durch den ersten Abschnitt und den zweiten Abschnitt nicht der gleiche Strom fließt. Dabei ist der zweite Abschnitt den Nebenleitungen zugeordnet. Diese Ausführungsform benötigt wenig Bauteile, führt aber dazu, dass bei einem Fehler stets das gesamte Traktionsnetz abgeschaltet wird.

Ein Vorteil der Erfindung ist, dass lediglich passive Bauelemente verwendet werden können, so dass eine zusätzliche Steuerelektronik entfallen kann. Dies führt zu einer Ersparnis beim Aufwand und bei den Kosten. Ferner lässt sich die Sicherung sehr kompakt ausführen, so dass nur ein geringer Bauraum benötigt wird.

In einer Ausführungsform ist die elektrische Sicherung als Pyroelement ausgebildet, in das das mindestens eine Auslösemittel integriert ist, was eine besonders kompakte Bauform ermöglicht.

In einer weiteren Ausführungsform sind mindestens zwei Auslösemittel vorgesehen, wobei dem ersten Auslösemittel ein erster Abschnitt der Stromschiene und dem zweiten Auslösemittel ein zweiter Abschnitt der Stromschiene zugeordnet ist, wobei durch den ersten und den zweiten Abschnitt nicht der gleiche Strom fließt. Mittels einer solchen elektrischen Sicherung können dann sowohl Hauptleitungen als auch Nebenleitungen eines Traktionsnetzes mit einer Sicherung abgesichert werden. Dabei weist dann die Stromschiene eine Verzweigung zu den Nebenleitungen auf, an dem dann der zweite Abschnitt festgelegt werden kann.

Bevorzugt werden die elektrische Sicherung und das Verfahren zum Schutz einer Hochvoltbatterie (400 V) in einem Kraftfahrzeug, insbesondere einem Kraftfahrzeug mit Hybrid- oder Elektroantrieb, eingesetzt. Die elektrische Sicherung und das Verfahren können prinzipiell aber auch zum Schutz anderer Fahrzeugbatterien mit anderen Spannungslagen (z.B. 48V oder 850 V) und anderer Einrichtungen verwendet werden.

Das erfindungsgemäße Verfahren weist dieselben Vorteile wie die entsprechenden Merkmale der elektrischen Sicherung auf.

Nachfolgend wird die Erfindung anhand bevorzugter Ausführungsbeispiele unter Bezugnahme auf die Figuren näher erläutert. Hierbei zeigen:

Fig. 1     eine schematische Darstellung einer Anschlusseinheit in einem Kraftfahrzeug mit Elektroantrieb aus dem Stand der Technik;

Fig. 2     eine schematische Darstellung eines Pyroelements aus dem Stand der Technik;

Fig. 3     eine schematische Darstellung eines Pyroelements mit einer Induktionsschleife in einer Schaltungsanordnung zur Verdeutlichung der Erfindung;

Fig. 4     eine schematische Darstellung einer Ausführungsform der elektrischen Sicherung mit induktiver Kopplung;

Fig. 5     eine schematische Darstellung einer weiteren Ausführungsform der elektrischen Sicherung mit induktiver Kopplung;

Fig. 6     eine schematische Darstellung einer nicht erfindungsgemäßen Ausführungsform der elektrischen Sicherung mit kapazitiver Kopplung;

Fig. 7     eine schematische Darstellung des zeitlichen Verlaufs eines Stroms bei Kurzschluss;

Fig. 8     eine schematische Darstellung einer nicht erfindungsgemäßen Ausführungsform der elektrischen Sicherung mit kapazitiver Kopplung mittels eines Doppelschichtkondensators;

Fig. 9     eine schematische Darstellung einer weiteren nicht erfindungsgemäßen Ausführungsform der elektrischen Sicherung mit einem Kaltleiter.

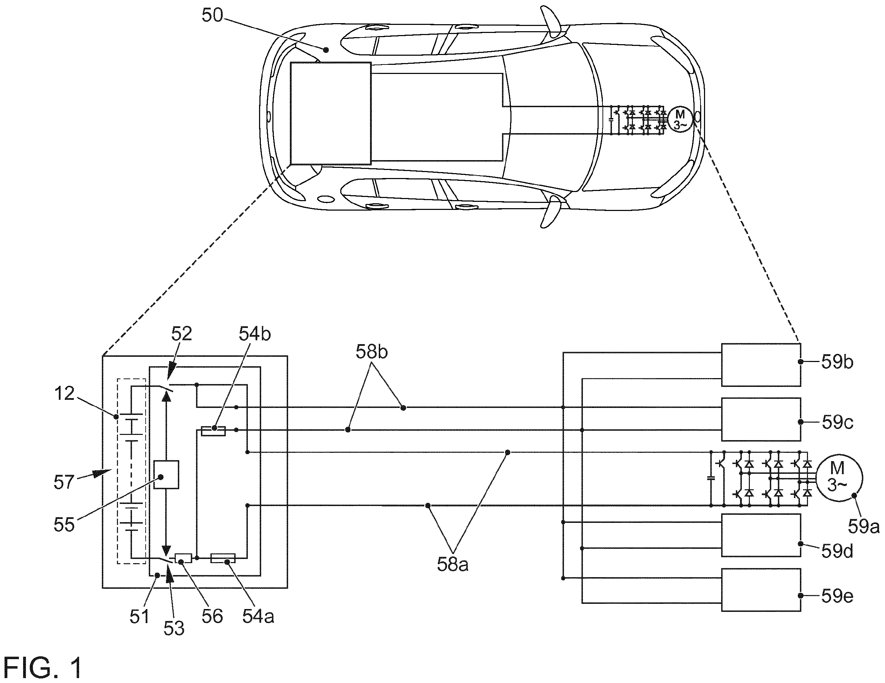

In Fig. 1 ist eine schematische Darstellung einer Anschlusseinheit 51 in einem Kraftfahrzeug 50 dargestellt. Die Anschlusseinheit 51 weist zwei elektromechanische Schütze 52, 53, einen Stromsensor 56, Schmelzsicherungen 54a,b und eine Steuerung 55 auf. Während des Batteriebetriebs (z.B. bei der Fahrt oder beim Laden der Batterien) wird eine Überlastung von Batteriezellen 57 einer Hochvoltbatterie 12 und der Schütze 52, 53 verhindert, indem ein maximal zulässiger Strom begrenzt wird, wobei aktuelle Randbedingungen berücksichtigt werden, wie beispielsweise eine Temperatur der Batteriezellen 57. Hierzu erfasst die Steuerung 55 über den Stromsensor 56 einen Strom, der von den Batteriezellen 57 an einen Verbraucher, beispielsweise einen Elektromotor 59a und einen Klimakompressor 59b, einen Zuheizer 59c, ein Ladegerät 59d bzw. einen DC/DC-Wandler 59e des Kraftfahrzeugs geliefert wird. Wird der maximale Strom überschritten, so erfolgt nach einer vordefinierten Plausibilisierungszeit ein Öffnen der Schütze 52, 53 mittels der Steuerung 55. Hierdurch wird eine Beschädigung der Batteriezellen 57 verhindert. Die Schmelzsicherungen 54a und 54b schützen darüber hinaus vor einer Überlastung sowohl der Batteriezellen 57 als auch des Hochvoltbordnetzes. Dabei ist der Elektromotor 59a über Hauptleitungen 58a und die anderen Hochvoltkomponenten 59b-e über Nebenleitungen 58b mit der Hochvoltbatterie 12 verbunden, wobei die Schmelzsicherung 54a die Hauptleitungen 58a und die Schmelzsicherung 54b die Nebenleitungen 58b absichert. Dabei ist die Schmelzsicherung 54a beispielsweise auf 400A und die Schmelzsicherung 54b auf 40A ausgelegt.

Bei der Sicherungsauslegung muss die durch die ausgeprägten Strom-Peaks hervorgerufene Alterung der Sicherungen mit berücksichtigt werden. Da die Auslöseschwelle der Sicherungen mit zunehmender Alterung abnimmt, ist es erforderlich, Sicherungen einzusetzen, die genügend groß sind, um auch in gealtertem Zustand bei Strom-Peaks innerhalb des normalen Betriebsstrom-Bereichs nicht auszulösen. Im Neuzustand hingegen haben diese großen Sicherungen jedoch eine höhere Auslöseschwelle, so dass die Kabelquerschnitte des angeschlossenen Hochvoltbordnetzes entsprechend groß gewählt werden müssen.

Um dies zu vermeiden, soll eine erfindungsgemäße elektrische Sicherung anstelle der Schmelzsicherungen 54a,b verwendet werden. Der Stromkreis lässt sich dann unabhängig von der Fahrzeuglaufzeit und dem Bauteilalter exakt bei den definierten Grenzwerten unterbrechen. Die Leitungsquerschnitte im Hochvoltbordnetz können entsprechend angepasst und gezielt festgelegt werden.

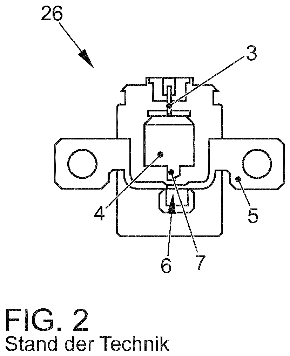

In Fig. 2 ist eine schematische Darstellung eines Pyroelements 26 (z.B. ein "Pyro Safety Switch" der Firma Autoliv) aus dem Stand der Technik gezeigt. Das Pyroelement 26 weist einen elektro-pyrotechnischen Zünder 3, ein mittels des elektro-pyrotechnischen Zünders 3 bewegbares Trennelement 4 und eine Stromschiene 5 mit einem Trennabschnitt 6 auf. Das bewegbare Trennelement 4 ist zwischen dem elektro-pyrotechnischen Zünder 3 und dem Trennabschnitt 6 der Stromschiene 5 angeordnet, so dass das bewegbare Trennelement 4 sich nach einem Auslösen des elektro-pyrotechnischen Zünders 3 in Bewegung setzt und hierdurch die Stromschiene 5 im Trennabschnitt 6 mittels einer hierfür vorgesehenen Nase 7 durchtrennt. Ein zum Auslösen notwendiger Zündstrom soll in den folgenden Beispielen im Bereich von > 1,75 A liegen (entsprechend dem notwendigen Zündstrom des Pyroelements der Firma Autoliv). Je nach verwendetem Zünder 3 können jedoch auch andere Zündströme notwendig sein.

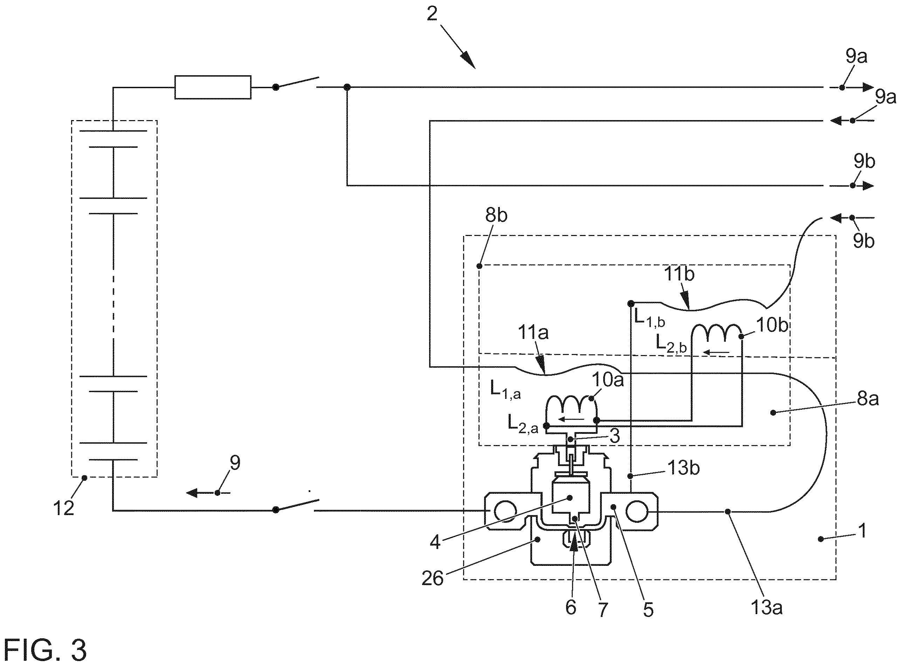

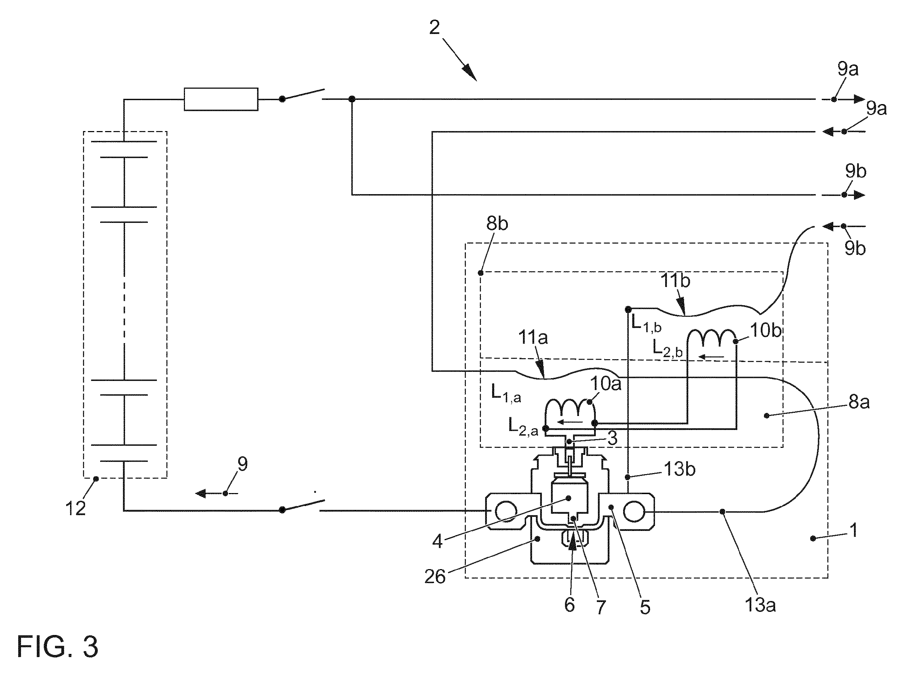

In Fig. 3 ist eine Schaltungsanordnung 2 zur Erläuterung der Erfindung gezeigt. Ein Pyroelement 26 wie aus der Fig. 2 ist hierbei induktiv mit den Hochvoltleitungen 13a und 13b gekoppelt. Die Hochvoltleitung 13a entspricht dabei einer Hauptleitung 58a und die Hochvoltleitung 13b entspricht dabei einer Nebenleitung 58b gemäß Fig. 1. Diese Kopplung wird mittels Auslösemitteln 8a, 8b erreicht, welches den zum Auslösen des elektro-pyrotechnischen Zünders 3 des Pyroelements 26 notwendigen Zündstrom bereitstellen, wenn sich der auf der Hochvoltleitung 13a und/oder 13b geführte Strom 9a und/oder 9b entsprechend dem im Kurzschlussfall zu erwartenden Stromgradienten ändert.

Die induktive Kopplung der Auslösemittel 8a, 8b ist hierbei mittels Induktionsschleifen 10a und 10b ausgeführt. Hierbei ist vorgesehen, dass eine Induktivität $L_{2a}$ und $L_{2b}$ der Induktionsschleifen 10a und 10b derart festgelegt ist, dass die Induktionsschleifen 10a und/oder 10b den notwendigen Zündstrom über eine induktive Kopplung mit der Hochvoltleitung 13a und 13b bereitstellen.

Wenn die Induktionsschleifen 10a und 10b in örtlicher Nähe zu den Hochvoltleitungen 13a und 13b mit ihren parasitären Induktivitäten $L_{1,a}$ und $L_{1,b}$ positioniert sind, entsteht am Zünder 3 eine induzierte Spannung $U_{Pyro}$, die proportional zum Verhältnis der Induktivitäten $L_{2,a}$ und $L_{1,a}$ bzw. $L_{2,b}$ und $L_{1,b}$ sowie der Änderung der über die Hochvoltleitungen 13a und/oder 13b geführten Ströme 9a bzw. 9b ist. Bei geeigneter Wahl der Induktivität $L_{2,a}$ und $L_{2,b}$ sowie des Abstands der beiden Induktivitäten $L_{1,a}$ und $L_{2,a}$ sowie $L_{1,b}$ und $L_{2,b}$ zueinander kann erreicht werden, dass die induzierte Spannung $U_{Pyro}$ bei Auftreten eines Kurzschlusses groß genug ist, um einen notwendigen Zündstrom $I_{Pyro}$ >1,75 A im Zündkreis des Zünders 3 zu erzeugen und diesen hierdurch auszulösen.

Unter der Annahme einer Gesamtinduktivität $L_{HVB,1}$ von 20 µH für den Hauptpfad zum leistungsstarken Antrieb (Strom 9a) und einer Gesamtinduktivität für den Nebenleitungspfad $L_{HVB,2}$ von 5 µH für den Nebenpfad zu den leistungsschwächeren Nebenaggregaten (Strom 9b) und einem Widerstand $R_{HVB}$ von 100 mΩ (inkl. der Hochvoltbatterie 12) der Schaltungsanordnung 2, beispielsweise eines Hochvoltbordnetzes eines Kraftfahrzeugs, ergeben sich die Zeitkonstanten

$$\tau_{HVB,1} = L_{HVB,1} / R_{HVB} = 20 * 10^{-6} \text{ H} / 100 * 10^{-3} \, \Omega = 0,2 \text{ ms}$$

und

$$\tau_{HVB,2} = L_{HVB,2} / R_{HVB} = 5 * 10^{-6} \text{ H} / 100 * 10^{-3} \, \Omega = 0,05 \text{ ms.}$$

Dies bedeutet, dass 0,2 ms bzw. 0,05 ms nach Auftreten des Kurzschlusses 63 % des stationären Kurzschlussstroms erreicht werden (Def. der Zeitkonstante eines Systems 1. Ordnung). Bei einer angenommenen Batteriespannung der Hochvoltbatterie 12 von $U_{Batt}$ = 400 V ergibt sich für den stationären Kurzschlussstrom ein Wert von

$$I_{KS} = 400 \text{ V}/100 \text{ m}\Omega = 4000 \text{ A,}$$

aus der eine zeitliche Stromänderung im Kurzschlussfall von

$$\Delta I_{KS,1}/\Delta t = 0,66 * 4000 \text{ A}/0,2 \text{ ms} = 13,2 * 10^{6} \text{ A/s}$$

bzw.

$\Delta I_{KS,2}/\Delta t = 0,66 * 4000 \text{ A}/0,05 \text{ ms} = 52,8 * 10^{6} \text{ A/s}$ folgt. Unter der Annahme eines Induktivitätsbelags von 1 nH/cm für die Hochvoltleitung 13a und 0,5 nH/cm für die Hochvoltleitung 13b und einer Länge der Induktivitäten $L_{2,a}$ und $L_{2,b}$ von 1 cm, induziert diese Stromänderung in der Induktivität $L_{1,a}$ die Spannung

$$U_{HV,a} = - L_{1,a} * \Delta I_{KS}/\Delta t = - 1 \text{ nH} * 13,2 * 10^{6} \text{ A/s} = -13,2 * 10^{-3} \text{ Vs/A} * \text{A/s} = -13,2 \text{ mV.}$$

und in der Induktivität $L_{1,b}$ die Spannung

$$U_{HV,b} = - L_{1,b} * \Delta I_{KS}/\Delta t = - 0,5 \text{ nH} * 52,8 * 10^6 \text{ A/s} = -26,4 * 10^{-3} \text{ Vs/A} * \text{A/s} = -26,4 \text{ mV}.$$

Unter der weiteren Annahme eines Kopplungsfaktors von 1 zwischen den beiden Induktivitäten $L_{1,a}$ und $L_{2,a}$ sowie $L_{1,b}$ und $L_{2,b}$ resultiert hieraus eine Spannung in der Induktivität $L_2$ von

$$U_{Pyro} = (L_{2,a} / L_{1,a}) * U_{HV,a} \qquad (1a)$$

bzw.

$$U_{Pyro} = (L_{2,b} / L_{1,b}) * U_{HV,b}. \qquad (1b)$$

Unter der weiteren Annahme eines elektrischen Innenwiderstands des Zünders 3 von 5 $\Omega$ (in der Regel weisen solche Zünder Innenwiderstände von 0,2 $\Omega$ bis 4,5 $\Omega$ auf), ist zum Überschreiten des Auslösestroms $I_{Pyro}$ von 1,75 A eine induzierte Spannung in den Induktivitäten $L_{2,a}$ und $L_{2,b}$ von

$$U_{Pyro} > 5 \, \Omega * 1,75 \text{ A} = 8,75 \text{ V}$$

erforderlich. Die hierfür erforderlichen Induktivitäten $L_{2,a}$ und $L_{2,b}$ ergeben sich aus Gleichung (1a) und (1b) zu

$$L_{2,a} = (U_{Pyro} / U_{HV,a}) * L_{1,a} = (8,75 \text{ V} / 13,2 \text{ mV}) * 1 \text{ nH} = 0,66 \, \mu H$$

bzw.

$$L_{2,b} = (U_{Pyro} / U_{HV,b}) * L_{1,b} = (8,75 \text{ V} / 26,4 \text{ mV}) * 0,5 \text{ nH} = 0,17 \, \mu H$$

und liegen damit in einem Bereich, der eine Realisierung der Induktivität innerhalb eines überschaubaren Bauraums ermöglicht. So können die Induktivität $L_{2,a}$ und $L_{2,b}$ beispielsweise direkt in das Pyroelement 26 integriert werden.

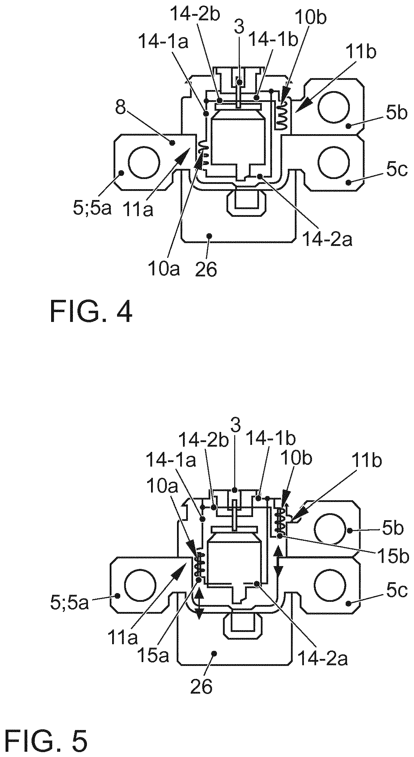

Eine solche kompakte Ausführungsform der elektrischen Sicherung 1 ist in Fig. 4 dargestellt. Hierbei sind die Induktionsschleifen 10a und 10b direkt in das Pyroelement 26 integriert, so dass eine kompakte Ausführungsform der elektrischen Sicherung 1 mit geringen Abmaßen erreicht wird. Hierzu sind die Induktionsschleifen 10a und 10b über eine Länge von ca. 1 cm an den Abschnitten 11a und 11b der Stromschiene 5 angeordnet und mit dieser induktiv gekoppelt. Die Stromschiene 5 weist dabei eine Lasche 5a auf, über die die Stromschiene 5 mit der Hochvoltbatterie 12 verbunden ist. Weiter weist die Stromschiene 5 eine Lasche 5b und 5c auf, wobei an die Lasche 5b die Hochvoltleitung 13b und an die Lasche 5c die Hochvoltleitung 13a angeschlossen wird. Dabei fließt zwar über den Abschnitt 11a der gesamte Strom und nicht nur der Strom in die Hochvoltleitung 13a, da dieser aber erheblich größer ist als der Strom in der Hochvoltleitung 13b, ist dies vernachlässigbar. Prinzipiell könnte die Induktionsschleife 10a aber auch an der Lasche 5c angeordnet werden. Dies gilt dann auch für die später erläuterten Ausführungsformen. Eine Induktivität der Induktionsschleifen 10a und 10b wird entsprechend der oben beschriebenen Herleitung beispielsweise auf 0,66 $\mu$H bzw. 0,17 $\mu$H dimensioniert und die Induktionsschleifen 10a und 10b über Zuleitungen 14-1a, 14-2a bzw. 14-1b, 14-2b mit dem Zünder 3 verbunden. Die Induktivität der Abschnitte 11a und 11b entspricht hier der oben gemachten Annahme von 1 nH bzw. 0,5 nH.

In Fig. 5 ist eine schematische Darstellung einer weiteren Ausführungsform der elektrischen Sicherung 1 gezeigt. Diese Ausführungsform ist weitgehend identisch mit der in Fig. 4 gezeigten Ausführungsform. Gleiche Bezugszeichen bezeichnen hierbei gleiche Begriffe oder Merkmale. Zusätzlich ist vorgesehen, dass die Auslösemittel 8a, 8b ferner in die Induktionsschleifen 10a und 10b hinein bewegbare Eisenkerne 15a und 15b aufweisen, über die die Induktivitäten verändert werden können. Die bewegbaren Eisenkerne 15a und 15b ermöglichen es, die Induktivitäten beispielsweise auch nach der Herstellung der elektrischen Sicherung 1 zu verändern und hierüber den Grenzwert für die Änderung der über die Abschnitte 11a, 11b fließenden Ströme flexibel einstellen und an vorliegende Randbedingungen anpassen zu können.

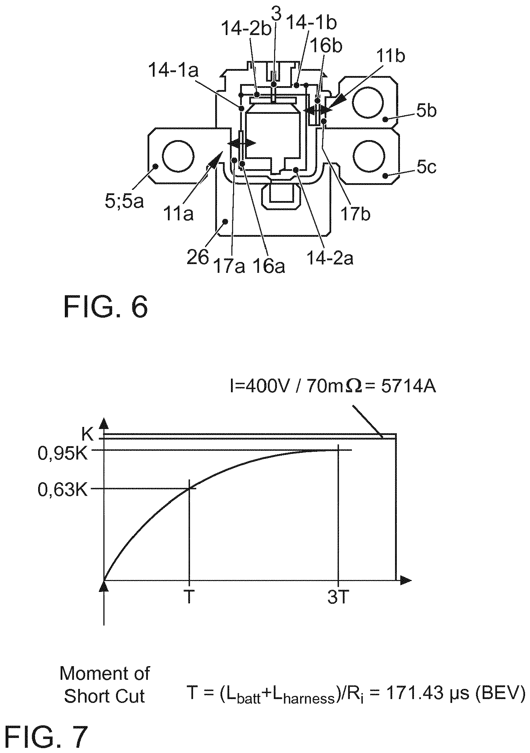

In Fig. 6 ist eine schematische Darstellung einer weiteren Ausführungsform der elektrischen Sicherung 1 gezeigt. Die elektrische Sicherung 1 ist weitgehend identisch zu den bereits beschriebenen Ausführungsformen, gleiche Bezugszeichen bezeichnen wiederum gleiche Merkmale oder Begriffe. In dieser Ausführungsform ist jedoch vorgesehen, dass die Auslösemittel 8a, 8b Koppelelemente 16a und 16b umfassen. Diese Koppelelemente 16a und 16b sind als Kondensatorplatten ausgebildet und bilden zusammen mit den Abschnitten 11a und 11b der Stromschiene 5 jeweils einen Kondensator, wobei die Abschnitte 11a und 11b hierbei als virtuelle Kondensatorplatten der Kondensatoren aufzufassen sind. Die Kapazitäten dieser Kondensatoren sind derartig festgelegt, dass die Koppelelemente 16a und 16b den notwendigen Zündstrom für den Zünder 3 über kapazitive Kopplungen mit den Abschnitten 11a und 11b der Stromschienen 5a und 5b bereitstellen, wenn die Stromänderung bzw. der Strom auf mindestens einem der Abschnitte 11a oder 11b einen Grenzwert überschreitet.

Die Koppelelemente 16a und 16b können in Bezug auf Abstände 17a und 17b zu den Abschnitten 11a und 11b der Stromschienen 5a und 5b beweglich ausgebildet sein. Hierüber lassen sich die Kapazitäten der gebildeten Kondensatoren einstellen, wobei die Kapazitäten in erster Näherung direkt antiproportional zu den Abständen 17a und 17b sind.

In erster Näherung sind die Kapazitäten des Kondensators (bei gegebener Breite) proportional zur Länge der Abschnitte 11a und 11b, in dem die Koppelelement 16a und 16b parallel zu den Abschnitten 11a, 11b angeordnet sind. Die Kondensatoren mit den Kapazitäten $C_{12,a}$ und $C_{12,b}$ bewirken eine Kopplung zwischen den Stromkreisen, die über die Abschnitte 11a und 11b geführt werden und dem Stromkreis, welcher zum Zünder 3 führt. Für den auf die Kondensatorplatten fließenden Ströme gilt:

$$i_a = C_{12,a} * du/dt \qquad\qquad (2a)$$

bzw.

$$i_b = C_{12,b} * du/dt \qquad\qquad (2b)$$

mit du/dt als zeitliche Änderung der Spannung.

Bei Kapazitäten von beispielsweise 100 pF und elektrischer Spannungsänderung von 400 V innerhalb von 0,1 $\mu$s, ergibt sich ein Strom von 400 mA.

Unter Berücksichtigung von maximal zulässigen Außenabmessungen für das Pyroelement 26, steht für die kapazitive Kopplung ein nutzbarer Abschnitt der Abschnitte 11a, 11b von 1 cm zur Verfügung. Bei Verwendung von Kupfer als Leitermaterial der Stromschiene 5 ergibt sich für eine Länge von 1 cm und einer Querschnittsfläche A von 50 mm$^2$ ein elektrischer Widerstand von

$$R = r_{Cu} * A = 0,01789 \ \Omega \ mm^2/m * 1 \ cm / 50 \ mm^2 = 3.56 \ \mu\Omega$$

Unter der Annahme eines Innenwiderstands $R_i$ der Hochvoltbatterie 12 von 70 m$\Omega$ und einer Induktivität $L_{batt}$ der Hochvoltbatterie von 9,5 $\mu$H, sowie einer Induktivität des

Hochvoltbordnetzes $L_{harness,a}$ von 2,5 $\mu$H bzw. $L_{harness,b}$ von 1,25 $\mu$H ergeben sich Zeitkonstanten von

$$T_a = (L_{batt} + L_{harness,a}) / R_i = 12 \ \mu H / 70 \ m\Omega = 171.43 \ \mu s,$$

bzw.

$$T_b = (L_{batt} + L_{harness,b}) / R_i = 10,75 \ \mu H / 70 \ m\Omega = 153.57 \ \mu s,$$

mit der ein Kurzschluss-Strom auf 66 % seines stationären Endwerts von 5714 A ansteigt (Fig. 7). Dies bedeutet, die Stromänderung direkt nach Auftreten eines Kurzschlusses beträgt

$$di_{KS,a}/dt = 0,66 * 5714 \ A / 171,43 \ \mu s = 21,99 * 10^6 \ A/s$$

bzw.

$$di_{KS,b}/dt = 0,66 * 5714\ A\ /\ 153,57\ \mu s = 23,55 * 10^6\ A/s,$$

was mit dem elektrischen Widerstand der Stromschiene von 3,56 $\mu\Omega$ (s.o.) eine Änderung der Spannung von

$$du_a\ /dt = R * di_{KS,a}/dt = 3,56\ \mu\Omega * 21,99 * 10^6\ A/s = 78,28\ V/s$$

bzw.

$$du_b\ /dt = R * di_{KS,b}/dt = 3,56\ \mu\Omega * 23,55 * 10^6\ A/s = 83,83\ V/s\ ergibt.$$

Hierbei sei angemerkt, dass die angenommenen Werte etwas von den angenommenen Werten bei der Berechnung der Induktivität zu Fig. 3 abweichen. $L_{harness}$ ist dabei insbesondere der Induktivitätsbeleg der Hochvoltleitungen 13a bzw. 13b.

Aus Gleichungen 2a und 2b folgt für die Kondensatoren

$$C_{12a,b} = i\ /\ (du_{a,b}\ /dt),$$

woraus Werte für die Kapazitäten von 23,36 mF bzw. 20,88mF resultieren, um bei einer Spannungsänderung von 78,28 V/s bzw. 83,83 V/s den zum Auslösen des Pyroelements 26 notwendigen Zündstrom von 1.75 A hervorzurufen.

Eine kapazitive Kopplung über eine Kapazität mit einem solchen Wert von 23,36 mF bzw. 20,88 mFkann in einem akzeptablen Bauraum beispielsweise mittels Doppelschichtkondensatoren erreicht werden.

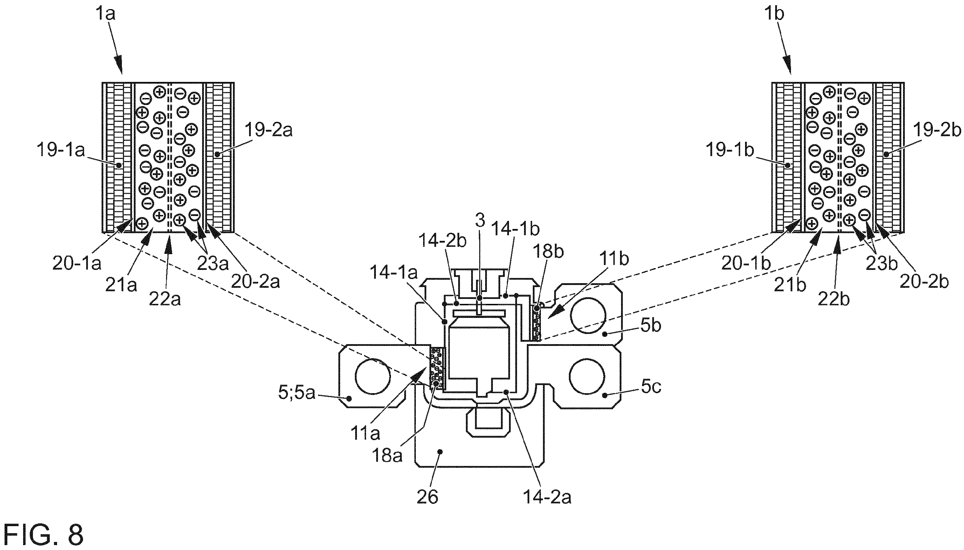

Eine Ausführungsform der elektrischen Sicherung 1 mit Doppelschichtkondensatoren 18a und 18b ist in Fig. 8 schematisch gezeigt. Die Doppelschichtkondensatoren 18a und 18b weisen je zwei Elektroden 19-1a,b sowie 19-2a,b sowie je einen Elektrolyt 21a,b mit je einem elektrisch durchlässigen Separator 22a,b auf, so dass sich bei Anlegen einer Spannung zwei Doppelschichten 20-1a, 20-2a sowie 20-1b, 202b bilden, in denen sich je eine Lage positiver und negativer Ionen 23a,b in spiegelbildlicher Anordnung bilden. Mindestens je ein Doppelschichtkondensator 18a und 18b wird an die Abschnitte 11a und 11b der Stromschiene 5 angeordnet, wobei die Elektroden 19-1a und 19-1b elektrisch mit den Abschnitten 11a, 11b verbunden sind, während die Elektrode 19-2a und 19-2b über Zuleitungen 14-1a und 14-2a bzw. 14-1b und 14-2b mit dem Zünder 3 verbunden sind.

Auch mit Hilfe anderer Kondensatortypen kann eine ausreichend große Kapazität erreicht werden. Beispielsweise können auch Superkondensatoren verwendet werden. Eine Realisierung nach dem Prinzip von Hochleistungs-Superkondensatoren kommt hierbei ohne Elektrolyt aus. Solche Superkondensatoren werden beispielsweise von der Firma Skeleton in Estland oder dem Technologie-Center für Nanowissenschaften der Universität Florida hergestellt bzw. entwickelt. Das Prinzip der von der Universität in Florida entwickelten Superkondensatoren basiert hierbei auf feinen Drähten mit einer nur wenige Nanometer dicken, isolierenden Ummantelung.

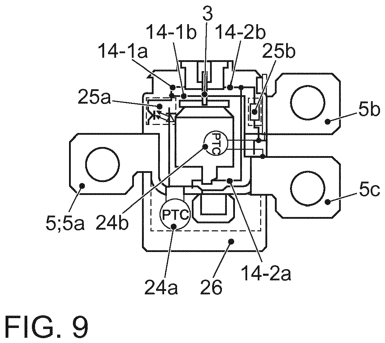

In Fig. 9 ist eine schematische Darstellung einer weiteren Ausführungsform der elektrischen Sicherung 1 gezeigt. Der prinzipielle Aufbau ist wieder nahezu identisch mit den bereits beschriebenen Ausführungsformen, jedoch weisen die Auslösemittel 8a, 8b in dieser Ausführungsform Kaltleiter 24a und 24b (engl. Positive Temperatur Coefficient, PTC) auf. Die Kaltleiter 24a und 24b werden in Reihe in die Stromschiene 5 geschaltet. Da ein direkter Abgriff des Spannungsabfalls über den Kaltleitern 24a und 24b im Gegensatz zu einer induktiven und kapazitiven Kopplung keine intrinsische Potentialtrennung aufweist, sind in dieser Ausführungsform noch Mittel zur galvanischen Trennung vorgesehen, beispielsweise mittels Optokoppler 25a und 25b (nur schematisch gezeigt).

Die Optokoppler 25a und 25b weisen je einen Phototransistor und je eine Leuchtdiode auf. Die Phototransistoren sind derartig ausgelegt, im vollausgesteuerten Zustand den notwendigen Zündstrom für den Zünder 3 bereitzustellen. Die Leuchtdioden sind ferner derartig ausgelegt, den Photostrom zum Aussteuern der Basis der Phototransistoren bereitzustellen. Bei normalen Betriebsströmen über die Abschnitte 11a, 11b sind die Phototransistoren hingegen nicht voll ausgesteuert und ein von diesen bereitgestellter Strom überschreitet den zum Auslösen des Zünders 3 notwendigen Zündstrom nicht. Erhöht sich hingegen ein Widerstand der Kaltleiter 24a und 24b bei einem Kurzschluss und entsprechend großem Stromfluss über die Abschnitte 11a, 11b auf Grund der resultierenden Erwärmung, steigt auch der Spannungsabfall über den Kaltleitern 24a und 24b ausreichend stark an, so dass die Leuchtdioden der Optokoppler 25a und 25b entsprechend stark angesteuert werden und der Photostrom an den Phototransistoren ausreicht, den notwendigen Zündstrom für den Zünder 3 bereitzustellen.

Dabei können die Auslösemittel 8a, 8b auch gemischt werden, sodass beispielsweise das erste Auslösemittel 8a eine Induktivität 10a aufweist und das zweite Auslösemittel 8b einen Kaltleiter 24b.

Die beschriebenen Ausführungsformen sind lediglich beispielhafter Natur und dienen der Verdeutlichung der Erfindung. Es kann je nach vorliegenden Randbedingungen (vorhandener Bauraum, Nennspannungen und -ströme etc.) vorgesehen sein, dass andere Parameterwerte (Induktivitäten, Kapazitäten etc.) verwendet werden.

**Bezugszeichenliste**

| | |
|---|---|
| 1 | elektrische Sicherung |
| 2 | Schaltungsanordnung |
| 3 | Zünder |
| 4 | Trennelement |
| 5 | Stromschiene |
| 6 | Trennabschnitt |
| 7 | Nase |
| 8a, 8b | Auslösemittel |
| 9, 9a, 9b | Strom |
| 10a, 10b | Induktionsschleife |
| 11a, 11b | Abschnitt |
| 12 | Hochvoltbatterie |
| 13a, 13b | Hochvoltleitung |
| 14-1a, 14-1b | Zuleitung |
| 14-2a, 14-2b | Zuleitung |
| 15a, 15b | Eisenkern |
| 16a, 16b | Koppelelement |
| 17a, 17b | Abstand |
| 18a, 18b | Doppelschichtkondensator |
| 19-1a, 19-1b | Elektrode |
| 19-2a, 19-2b | Elektrode |
| 20-1a, 20-1b | Doppelschicht |
| 20-2a, 20-2b | Doppelschicht |
| 21a, 21b | Elektrolyt |
| 22a, 22b | Separator |
| 23a, 23b | Ionen |
| 24a, 24b | Kaltleiter |
| 25a, 25b | Optokoppler |
| 26 | Pyroelement |
| 50 | Kraftfahrzeug |
| 51 | Anschlusseinheit |
| 52 | Schütz |
| 53 | Schütz |
| 54a, 54b | Schmelzsicherung |
| 55 | Steuerung |
| 56 | Stromsensor |
| 57 | Batteriezelle |
| 58a | Hauptleitungen |
| 58b | Nebenleitungen |
| 59a | Elektromotor |
| 59b | Klimakompressor |
| 59c | Zuleiter |
| 59d | Ladegerät |
| 59e | DC/DC-Wandler |

**Patentansprüche**

**1.**   Elektrische Sicherung (1), umfassend:

einen elektro-pyrotechnischen Zünder (3),

ein mittels des elektro-pyrotechnischen Zünders (3) bewegbares Trennelement (4), und

eine Stromschiene (5) mit einem Trennabschnitt (6),

wobei das bewegbare Trennelement (4) in Bezug auf den elektro-pyrotechnischen Zünder (3) und den Trennabschnitt (6) der Stromschiene (5) derart angeordnet ist, dass das bewegbare Trennelement (4) sich nach einem Auslösen des elektro-pyrotechnischen Zünders (3) in Bewegung setzt und hierdurch die Stromschiene (5) im Trennabschnitt (6) durchtrennt, wobei mindestens ein Auslösemittel (8a, 8b), welches derart ausgebildet ist, einen zum Auslösen des elektro-pyrotechnischen Zünders (3) notwendigen Zündstrom auf Grundlage eines über mindestens einen Abschnitt (11a, 11b) der Stromschiene (5) geführten Stroms oder dessen zeitlicher Änderung bereitzustellen, wenn der auf dem mindestens einen Abschnitt (11a, 11b) der Stromschiene (5) geführte Strom oder dessen zeitliche Änderung einen Grenzwert überschreitet,

wobei

das mindestens eine Auslösemittel (8a, 8b) eine Induktionsschleife (10a, 10b) umfasst, wobei die Induktivität der Induktionsschleife (10a, 10b) derart festgelegt ist, dass die Induktionsschleife (10a, 10b) den notwendigen Zündstrom über eine induktive Kopplung mit zumindest einem Abschnitt (11a, 11b) der Stromschiene (5) bereitstellt, **dadurch gekennzeichnet, dass** das mindestens eine Auslösemittel (8a, 8b) ferner einen in die Induktionsschleife (10a, 10b) hinein bewegbaren Eisenkern (15a, 15b) aufweist, über den die Induktivität verändert werden kann.

2. Elektrische Sicherung nach Anspruch 1, **dadurch gekennzeichnet, dass** die elektrische Sicherung (1) als Pyroelement (26) ausgebildet ist, in das das mindestens eine Auslösemittel (8a, 8b) integriert ist.

3. Elektrische Sicherung (1) nach einem der vorangegangenen Ansprüche, **dadurch gekennzeichnet, dass** mindestens zwei Auslösemittel (8a, 8b) vorgesehen sind, wobei das erste Auslösemittel (8a) einem ersten Abschnitt 11(a) der Stromschiene (5) und das zweite Auslösemittel (8b) einem zweiten Abschnitt 11(b) der Stromschiene (5) zugeordnet sind, wobei durch den ersten Abschnitt (11a) und den zweiten Abschnitt (11b) nicht der gleiche Strom fließt.

4. Verfahren zum Betreiben einer elektrischen Sicherung (1), umfassend die folgenden Schritte:

Bereitstellen eines Zündstroms für einen elektro-pyrotechnischen Zünder (3),

Auslösen des elektro-pyrotechnischen Zünders (3),

Bewegen eines bewegbaren Trennelements (4) mittels des ausgelösten elektro-pyrotechnischen Zünders (3),

Durchtrennen eines Trennabschnitts (6) einer Stromschiene (5) mittels des bewegbaren Trennelements (4), wobei

der zum Auslösen des elektro-pyrotechnischen Zünders (3) notwendige Zündstrom mittels mindestens eines Auslösemittels (8a, 8b) auf Grundlage eines auf mindestens einem Abschnitt (11a, 11b) der Stromschiene (5) geführten Stromes oder dessen zeitlicher Änderung bereitgestellt wird, wenn der auf dem mindestens einen Abschnitt (11a, 11b) der Stromschiene (5) geführte Strom oder dessen zeitlicher Änderung einen Grenzwert überschreitet,

wobei

das mindestens eine Auslösemittel (8a, 8b) eine Induktionsschleife (10a, 10b) umfasst,

wobei die Induktivität der Induktionsschleife (10a, 10b) derart festgelegt ist, dass die Induktionsschleife (10a, 10b) den notwendigen Zündstrom über eine induktive Kopplung mit zumindest einem Abschnitt (11a, 11b) der Stromschiene (5) bereitstellt, **dadurch gekennzeichnet, dass** das mindestens eine Auslösemittel (8a, 8b) ferner einen in die Induktionsschleife (10a, 10b) hinein bewegbaren Eisenkern (15a, 15b) aufweist, über den die Induktivität verändert werden kann.

5. Elektrisches Traktionsnetz in einem Kraftfahrzeug, umfassend eine Hochvoltspannungsquelle, einen Elektromotor (59a) und weitere Hochvoltkomponenten, wobei der Elektromotor (59a) über Hauptleitungen (58a) mit der Hochvoltspannungsquelle und die weiteren Hochvoltkomponenten über Nebenleitungen (58b) mit der Hochvoltspannungsquelle verbunden sind,

**dadurch gekennzeichnet, dass**

in den Hauptleitungen (58a) und/oder den Nebenleitungen (58b) jeweils eine elektrische Sicherung (1) nach Anspruch 1 angeordnet ist oder den Hauptleitungen (58a) und den Nebenleitungen (58b) eine gemeinsame elektrische Sicherung (1) nach Anspruch 3 zugeordnet ist, wobei das erste Auslösemittel (8a) den Hauptleitungen (58a) und das zweite Auslösemittel (8b) den Nebenleitungen (58b) zugeordnet ist.

**Claims**

1. Electric fuse (1), comprising:

   an electro-pyrotechnic igniter (3),
   a disconnection element (4) able to be moved by way of the electro-pyrotechnic igniter (3), and a current line (5) having a disconnection section (6),
   wherein the movable disconnection element (4) is arranged with respect to the electro-pyrotechnic igniter (3) and the disconnection section (6) of the current line (5) such that the movable disconnection element (4) is set in motion after the electro-pyrotechnic igniter (3) has been tripped and thereby severs the current line (5) in the disconnection section (6), wherein
   at least one trip means (8a, 8b) that is designed to provide an ignition current required to trip the electro-pyrotechnic igniter (3) on the basis of a current routed via at least one section (11a, 11b) of the current line (5) or to temporally change it when the current routed on the at least one section (11a, 11b) of the current line (5) or its temporal change exceeds a limit value,
   **characterized in that**,
   that at least one trip means (8a, 8b) comprises an induction loop (10a, 10b), wherein the inductance of the induction loop (10a, 10b) is defined such that the induction loop (10a, 10b) provides the required ignition current via an inductive coupling to at least one section (11a, 11b) of the current line (5), **characterized in that** the at least one trip means (8a, 8b) furthermore has an iron core (15a, 15b) able to move into the induction loop (10a, 10b) and by way of which it is possible to change the inductance.

2. Electric fuse according to Claim 1, **characterized in that** the electric fuse (1) is designed as a pyro element (26) into which the at least one trip means (8a, 8b) is integrated.

3. Electric fuse (1) according to either of the preceding claims, **characterized in that** at least two trip means (8a, 8b) are provided, wherein the first trip means (8a) is assigned to a first section (11a) of the current line (5) and the second trip means (8b) is assigned to a second section (11b) of the current line (5), wherein the same current does not flow through the first section (11a) and the second section (11b).

4. Method for operating an electric fuse (1), comprising the following steps:

   providing an ignition current for an electro-pyrotechnic igniter (3),
   tripping the electro-pyrotechnic igniter (3),
   moving a movable disconnection element (4) by way of the tripped electro-pyrotechnic igniter (3),
   severing a disconnection section (6) of a current line (5) by way of the movable disconnection element (4), wherein the ignition current required to trip the electro-pyrotechnic igniter (3) is provided by way of at least one trip means (8a, 8b) on the basis of a current routed on at least one section (11a, 11b) of the current line (5) or its temporal change when the current routed on the at least one section (11a, 11b) of the current line (5) or its temporal change exceeds a limit value,
   wherein
   the at least one trip means (8a, 8b) comprises an induction loop (10a, 10b), wherein the inductance of the induction loop (10a, 10b) is defined such that the induction loop (10a, 10b) provides the required ignition current via an inductive coupling to at least one section (11a, 11b) of the current line (5), **characterized in that** the at least one trip means (8a, 8b) furthermore has an iron core (15a, 15b) able to move into the induction loop (10a, 10b) and by way of which it is possible to change the inductance.

5. Electrical traction power system in a motor vehicle, comprising a high-voltage source, an electric motor (59a) and further high-voltage components, wherein the electric motor (59a) is connected to the high-voltage source via main lines (58a) and the further high-voltage components are connected to the high-voltage source via auxiliary lines (58b), **characterized in that**
   an electric fuse (1) according to Claim 1 is arranged in each of the main lines (58a) and/or the auxiliary lines (58b) or a shared electric fuse (1) according to Claim 3 is assigned to the main lines (58a) and to the auxiliary lines (58b), wherein the first trip means (8a) is assigned to the main lines (58a) and the second trip means (8b) is assigned to the auxiliary lines (58b).

**Revendications**

1. Dispositif de sécurité électrique (1) comprenant :

   un dispositif d'allumage électro-pyrotechnique (3),
   un élément de séparation (4) qui peut être déplacé au moyen du dispositif d'allumage électro-pyrotechnique (3), et
   une barre conductrice (5) munie d'une portion de séparation (6),
   l'élément de séparation déplaçable (4) étant disposé par rapport au dispositif d'allumage électro-pyrotechnique (3) et à la portion de séparation (6) de la barre conductrice (5) de telle sorte que l'élément de séparation déplaçable (4) se mette en mouvement après déclenchement du dispositif d'allumage électro-pyrotechnique (3) et sectionne ainsi la barre conductrice (5) dans la portion de séparation (6), dans lequel
   au moins un moyen de déclenchement (8a, 8b) qui est conçu pour générer un courant d'allumage, nécessaire au déclenchement du dispositif d'allumage électro-pyrotechnique (3), sur la base d'un courant véhiculé par au moins une portion (11a, 11b) de la barre conductrice (5) ou sur la base de la variation dudit courant dans le temps lorsque le courant véhiculé par l'au moins une portion (11a, 11b) de la barre conductrice (5) ou la variation dudit courant dans le temps devient supérieur(e) à une valeur limite,
   l'au moins un moyen de déclenchement (8a, 8b) comprenant une boucle d'induction (10a, 10b), l'inductance de la boucle d'induction (10a, 10b) étant définie de telle manière que la boucle d'induction (10a, 10b) génère le courant d'allumage nécessaire par couplage inductif avec au moins une portion (11a, 11b) de la barre conductrice (5), **caractérisé en ce que**
   l'au moins un moyen de déclenchement (8a, 8b) comporte également un noyau en fer (15a, 15b) qui peut être déplacé jusque dans la boucle d'induction (10a, 10b) et qui permet de modifier l'inductance.

2. Dispositif de sécurité électrique selon la revendication 1, **caractérisé en ce que** le dispositif de sécurité électrique (1) est conçu comme un élément pyrotechnique (26) dans lequel l'au moins un moyen de déclenchement (8a, 8b) est intégré.

3. Dispositif de sécurité électrique (1) selon l'une des revendications précédentes, **caractérisé en ce qu'**au moins deux moyens de déclenchement (8a, 8b) sont prévus, le premier moyen de déclenchement (8a) étant associé à une première portion 11(a) de la barre conductrice (5) et le deuxième moyen de déclenchement (8b) étant associé à une deuxième portion 11(b) de la barre conductrice (5), la première portion (11a) et la deuxième portion (11b) n'étant pas traversées par le même courant.

4. Procédé de fonctionnement d'un dispositif de sécurité électrique (1), ledit procédé comprenant les étapes suivantes :

   générer un courant d'allumage destiné à un dispositif d'allumage électro-pyrotechnique (3),
   déclencher le dispositif d'allumage électro-pyrotechnique (3),
   déplacer un élément de séparation déplaçable (4) au moyen du dispositif d'allumage électro-pyrotechnique déclenché (3),
   sectionner une portion de séparation (6) d'une barre conductrice (5) au moyen de l'élément de séparation déplaçable (4),
   le courant d'allumage nécessaire au déclenchement du dispositif d'allumage électro-pyrotechnique (3) étant généré à l'aide d'au moins un moyen de déclenchement (8a, 8b) sur la base d'un courant véhiculé par au moins une portion (11a, 11b) de la barre conductrice (5) ou sur la base de la variation dudit courant dans le temps lorsque le courant véhiculé par l'au moins une portion (11a, 11b) de la barre conductrice (5) ou la variation dudit courant dans le temps devient supérieur(e) à une valeur limite,
   l'au moins un moyen de déclenchement (8a, 8b) comprenant une boucle d'induction (10a, 10b), l'inductance de la boucle d'induction (10a, 10b) étant définie de telle sorte que la boucle d'induction (10a, 10b) génère le courant d'allumage nécessaire par couplage inductif avec au moins une portion (11a, 11b) de la barre conductrice (5), **caractérisé en ce que** l'au moins un moyen de déclenchement (8a, 8b) comporte également un noyau en fer (15a, 15b) qui peut être déplacé jusque dans la boucle d'induction (10a, 10b) et qui permet de modifier l'inductance.

5. Réseau de traction électrique d'un véhicule automobile, ledit réseau comprenant une source de haute tension, un moteur électrique (59a) et d'autres composants à haute tension,
   le moteur électrique (59a) étant relié à la source de haute tension par le biais de lignes principales (58a) et les autres composants à haute tension étant reliés à la source de haute tension par le biais de lignes secondaires (58b),

**caractérisé en ce que**
un dispositif de sécurité électrique (1) selon la revendication 1 est disposé dans les lignes principales (58a) et/ou les lignes secondaires (58b) ou un dispositif de sécurité électrique commun (1) selon la revendication 3 est associé aux lignes principales (58a) et aux lignes secondaires (58b), le premier moyen de déclenchement (8a) étant associé aux lignes principales (58a) et le deuxième moyen de déclenchement (8b) étant associé aux lignes secondaires (58b).

FIG. 1

FIG. 2
Stand der Technik

FIG. 3

EP 3 327 745 B1

FIG. 4

FIG. 5

FIG. 6

FIG. 7

$$I = 400V / 70m\Omega = 5714A$$

Moment of
Short Cut

$$T = (L_{batt} + L_{harness})/R_i = 171.43 \ \mu s \ (BEV)$$

FIG. 8

FIG. 9

FIG. 3

EP 3 327 745 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010002102 A1
- DE 102012214835 A1
- EP 3054577 A1
- EP 0725412 A2
- EP 0563947 A1
- DE 202015106793 U1